# EUROPÄISCHE PATENTANMELDUNG

(11) **EP 0 622 972 A2**
(43) Veröffentlichungstag der Anmeldung: **02.11.1994**
(21) Anmeldenummer: 94105365.4
(22) Anmeldetag: 07.04.1994
(51) Int. Cl.: H05B 6/14

(54) **Verfahren zum induktiven Beheizen einer Galette und induktiv beheizte Galette**

(30) Priorität: 29.04.1993 DE 4313837
(71) Anmelder: NEUMAG - Neumünstersche Maschinen- und Anlagenbau GmbH, D-24536 Neumünster (DE)
(72) Erfinder: Schlüter, Ekkehard, D-24537 Neumünster (DE)
(74) Vertreter: Frese-Göddeke, Beate, Dr.

(57) **Zusammenfassung**

Bei einer bekannten induktiv beheizten Galette wird in mehreren Heizzonen jeweils die Temperatur über die Heizleistung geregelt. Bei dieser Galette ist der Aufwand durch Temperaturfühler, Meßwertübertrager und Regler für jede Heizzone groß. Es soll ein Verfahren zum induktiven Beheizen einer Galette und eine entsprechende Galette entwickelt werden, bei dem mit möglichst geringen Aufwand ein Temperaturprofil mit Abweichungen kleiner als 1,5°C einstellbar ist.

Bei dem erfindungsgemäßen Verfahren werden mindestens zwei Heizzonen zu einer Heizgruppe zusammengefaßt, in jeder Heizgruppe die Temperatur gemessen und über die Heizleistung einer ausgewählten Heizzone der Heizgruppe geregelt. Die Heizleistung der übrigen Heizzonen der Heizgruppe wird jeweils in Abhängigkeit zu dieser Heizleistung zugeführt. Das erfindungsgemäße Verfahren führt zu einem besseren Temperaturprofil und durch niedrigere Vorrichtungskosten zu geringerem Aufwand.

Induktiv beheizte Galetten zur Herstellung von Chemiefasern.

## Beschreibung

Die Erfindung betrifft ein Verfahren zum induktiven Beheizen einer Galette gemäß dem Oberbegriff des Anspruchs 1 und eine induktiv beheizte Galette gemäß dem Oberbegriff des Anspruchs 10.

Bei der Herstellung von Chemiefasern werden aus einer Düsenplatte ersponnene Filamente zu Filamentgarn, z. B. einem oder mehrere Fäden, zusammengefaßt und über Galetten einem Kreuzspulenwickler, einer Kanne oder einer Schneide zugeführt.

Galetten sind angetriebene, rotierende Walzen, die von den Fäden auf ihren Mantelflächen berührt werden. Sie haben die Aufgabe, die Fäden zu führen, anzutreiben zu erwärmen und zu verstrecken.

Dazu sind je zwei Galetten nah beieinander als Galetten-Duo angeordnet. Im Betrieb sind die beiden Galetten eines Duos von zwei oder mehreren nebeneinander geführten Fäden mehrmals umschlungen und ihre Mantelfläche beheizt. Bei einer induktiv beheizten Galette wird der als Mantel ausgebildete Rotor beheizt, indem Primärwicklungen eines Stators im Innern des Rotors Heizleistung zugeführt wird, die in Sekundärwicklungen des Rotors Wärme erzeugen. Beim Verstrecken werden die Fäden von Galetten-Duo zu Galetten-Duo geführt, wobei sich die Umfangsgeschwindigkeit mit jedem Duo steigert.

Durch das Verstrecken wird eine dauerhafte Orientierung der Molekülketten der Chemiefasern erzielt. Ein gleichmäßiges Verstrecken gewährleistet einen gleichmäßigen Gebrauchswert der Fäden, z. B. gleichmäßige Zugfestigkeit und Einfärbbarkeit. Ein gleichmäßiges Verstrecken ist jedoch nur erreichbar, wenn auf den Mantelflächen der Galetten ein gleichmäßiges Temperaturprofil eingestellt und konstant gehalten werden kann.

Insbesondere ist die in den Randbereichen stark abnehmende Temperatur auf der Ablaufseite, an der die Fäden das Duo verlassen, problematisch. Wird dabei einer der Fäden mit ausreichender Temperatur erwärmt, ein anderer jedoch nicht mehr, so führt dies zu unterschiedlichem Gebrauchswert der Fäden.

Aus der DE-A 16 60 330 ist eine induktiv beheizte Galette bekannt, die auf ihrem Stator eine Primärwicklung aufweist. Als Sekundärwicklungen sind im Mantel der Galette mehrere Kupferringe eingepaßt. Durch Verändern der Lage der Kupferringe kann der gewünschten Temperaturverlauf der Mantelfläche eingestellt werden. Wird jedoch der Betriebszustand der Galette, z. B. die Umfangsgeschwindigkeit oder die Temperatur, geändert, muß eine neue, aufwendige Einstellung der Kupferringe erfolgen.

Weiterhin sind in der DE-A 41 01 354 und der DE-C 30 33 482 induktiv beheizte Walzen für die Papierbehandlung mit mehreren Heizzonen beschrieben, wobei jeder Heizzone eine separate Regelung zugeordnet ist.

Der Anmelderin ist außerdem eine gattungsbildene induktiv beheizte Galette mit mehreren Heizzonen und ein gattungsgemäßes Verfahren zum induktiven Beheizen der Galetten, bei dem in jeder Heizzone die Temperatur über die Heizleistung geregelt wird, bekannt. Bei dieser Galette ist der Aufwand durch Temperaturfühler, Meßwertübertrager und Regler für jede Heizzone groß. Ferner können bei den Galetten mit mehreren geregelten Heizzonen leicht Kopplungseffekte auftreten.

Verglichen mit den Walzen zur Papierbehandlung ist eine Galetten für Chemiefasern im allgemeinen wesentlich kürzer und weist eine geringere Mantelstärke auf. Bei Galetten ist es daher, z. B. wegen der größeren Randeffekte, schwieriger ein genaues Temperaturprofil einzustellen. Wählt man nun relativ viele Heizzonen geringer achsialer Ausdehnung, so führt die starke Wärmekopplung der Heizzonen im Mantel zu einer losen Kopplung der Regelkreise der Heizzonen. Diese gegenseitige Beeinflussung der Regelkreise kann als Wirkung zusätzlicher Störgrößen betrachtet werden. Zusätzliche Störgrößen beeinträchtigen das Regelverhalten und können zu Temperaturschwankungen führen. Sie erschweren eine genaue Einstellung eines Temperaturprofiles oder machen sie sogar unmöglich.

Die Aufgabe der Erfindung ist es, ein Verfahren zum induktiven Beheizen einer Galette gemäß dem Oberbegriff des Anspruchs 1 zu entwickeln, bei dem mit möglichst geringem Aufwand ein Temperaturprofil mit Abweichungen kleiner als 1,5°C einstellbar ist, und eine induktiv beheizte Galette gemäß dem Oberbegriff des Anspruchs 10 zur Durchführung eines Verfahrens nach Anspruch 1 zu entwickeln.

Diese Aufgabe ist durch die kennzeichnenden Merkmale der Ansprüche 1 und 10 gelöst.

Durch die Merkmale des Kennzeichens des Anspruchs 1 kann den einzelnen Heizzonen der Galette unterschiedliche Heizleistung zugeführt werden, ohne jede Heizzone einzeln zu regeln. Durch die unterschiedliche Zufuhr von Heizleistung zu den einzelnen Heizzonen, indem die Heizleistung der ausgewählten Heizzone einer Heizgruppe durch die Regelung bestimmt wird und die Heizleistung der übrigen Heizzonen in Abhängigkeit zu dieser Heizleistung zugeführt wird, kann ein beliebiges, z. B. konstantes, Temperaturprofil eingestellt werden. Temperaturabsenkungen an den Rändern können ausgeglichen werden.

Durch die Zusammenfassung von zwei oder mehreren Heizzonen zu einer Heizgruppe und die Regelung der Temperatur nur der ausgewählten Heizzonen werden Kopplungseffekte, wie sie zwischen einzelnen geregelten Heizzonen auftreten, vermieden. Die zwischen Heizgruppen mit mehreren Heizzonen möglichen Koppungseffekte sind wesentlich geringer als die zwischen einzelnen geregelten Heizzonen. Die fehlenden oder zumindest wesentlich geringeren Koppungseffekte verringern die auf die Regelkreise wirkenden Störgrößen und führen so zur Verbesserung des Regelverhaltens. Durch die Fäden verursachte äußere Störgrößen, z. B. durch schwankende Feuchtigkeit der Fäden, können schneller ausgeregelt werden.

Mit dem erfindungemäßen Verfahren ist es möglich, im Betrieb die Abweichungen der Temperatur von dem vorgegebenen Temperaturprofil, auch am Randbereich auf der Ablaufseite geringer als 1,5°C zu halten.

Da pro Heizgruppe nur ein Temperaturfühler, ein Meßwertübertrager und ein Regler benötigt wird, führt das erfindungsgemäße Verfahren bei geringeren Vorrrichtungkosten, d. h. geringerem Aufwand, zu einem besseren Temperaturprofil.

Gemäß Anspruch 2 wird die Temperatur im Bereich der ausgewählten Heizzone gemessen, deren Heizleistung direkt geregelt wird. Dieses Verfahren vereinfacht die Ermittlung der Abhängigkeit der den einzelnen Heizzonen zuzuführenden Heizleistungen. Es wird bevorzugt bei sich häufig änderenden Betriebszuständen eingesetzt.

Die Zufuhr der Heizleistung der übrigen Heizzonen proportional zu der der ausgewählten Heizzone gemäß Anspruch 3 läßt sich technisch einfach, z. B. mittels Transformatoren, realisieren.

Die in den Ansprüchen 4 und 5 beschriebenen Verfahren, bei denen ein Lastrelais zur Zufuhr der Heizleistung aller Heizzonen und Transformatoren verwendet werden, ermöglichen einen einfachen und robusten Aufbau der Regelvorrichtungen der Galette. Diese Verfahren sind besonders für Anlagen mit geringer Stückzahl von Galetten geeignet.

Die Regelung der Temperatur der ausgewählten Heizzone durch Zufuhr der Heizleistung direkt durch das Lastrelais gemäß Anspruch 4 führt zu kurzen Einschaltzeiten. Bei der Zufuhr der Heizleistung aller Heizzonen über Transformatoren gemäß Anspruch 5, kann die Heizleistung bei niedrigerer Spannung und längeren Einschaltzeiten zugeführt werden. Im Falle des Anspruch 4 wird ein Transformator weniger benötigt, wogegen die bei den im Anspruch 5 beschriebenen Verfahren längeren Einschaltzeiten die Gefahr von Überschwingeffekten reduziert.

Die Verfahren gemäß den Ansprüchen 6 und 7, bei denen Mikroprozessoren eingesetzt werden, sind besonders für Anlagen mit hoher Stückzahl von Galetten geeignet. Durch den Wegfall von Transformatoren wird das Gewicht und die Größe der Regelvorrichtungen verringert.

Gemäß Anspruch 7 einen Mikroprozessor auch zur Regelung einzusetzen, ermöglicht eine Änderung von Betriebszuständen durch einfache Programmänderungen, insbesondere dann, wenn die dazu notwendigen Informationen bereits im Mirkroprozessor abgelegt sind.

Bei den üblicherweise eingesetzten Galetten mit einer Länge von 200 bis 500 mm hat es sich als vorteilhaft herausgestellt, die Heizleistung in zwei Heizgruppen mit mindestens zwei Heizzonen gemäß Anspruch 8 zuzuführen.

Bei diesem Galetten wurden bei dem Verfahren gemäß Anspruch 9 mit 3 Heizzonen besonders geringe Abweichungen vom vorgegebenen Temperaturprofil erreicht.

Eine Galette gemäß Anspruch 10 ist zur Durchführung eines Verfahren nach Anspruch 1 geeignet. Eine Galette gemäß den Ansprüchen 11 bis 14 ist besonders zur Durchführung eines Verfahrens nach den Ansprüchen 4 bis 7 geeignet.

Die Erfindung wird anhand zweier, in der Zeichnung schematisch dargestellten Beispielen weiter erläutert.

Eine Galette des ersten Beispieles ist in einer Übersicht ohne Regelvorrichtung in Figur 1 und ausschnittsweise mit Regelvorrichtung in Figur 2 dargestellt. Figur 3 zeigt ausschnittsweise eine Galette mit ihrer Regelvorrichtung des zweiten Beispieles.

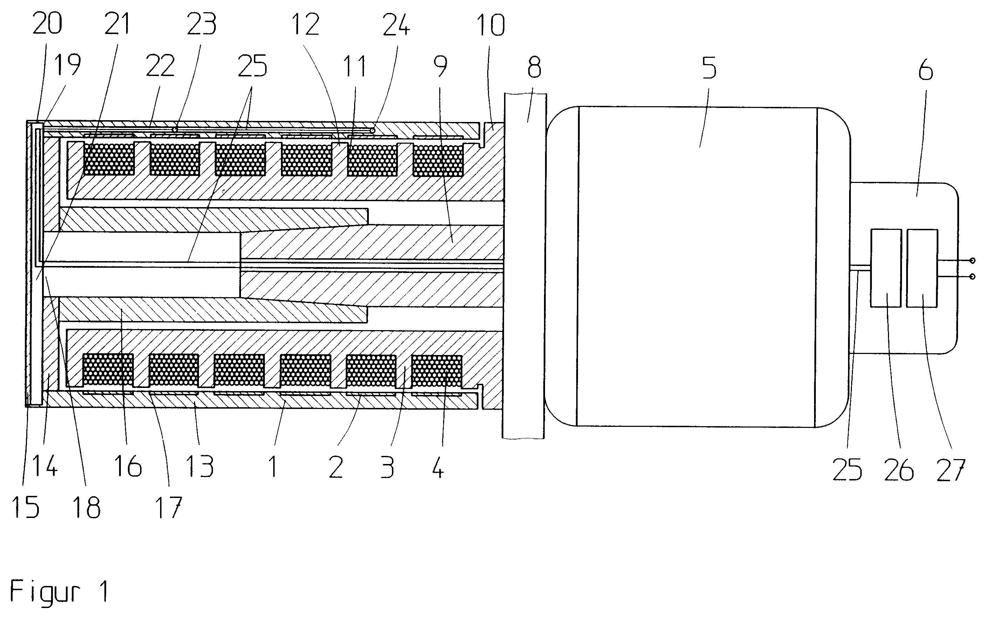

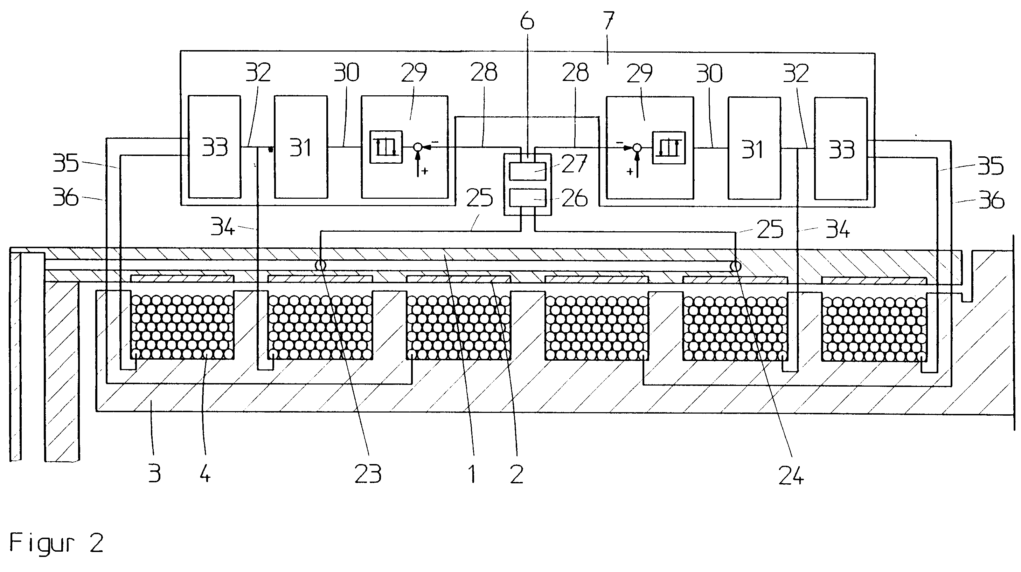

### Beispiel 1 (Figuren 1 und 2)

Eine induktiv beheizte Galette weist einen als Hohlwalze ausgebildeten Rotor 1 mit Sekundärwicklungen 2, einen Stator 3 mit Primärwicklungen 4 im Inneren des Rotors 1, einen Motor 5, einen Meßwertübertrager 6 und eine Regelvorrichtung 7 auf. Die Galette ist, im allgemeinen zusammen mit weiteren Galetten, an einer Gehäusewand 8 angeordnet, wobei der Stator 3 auf der einen und der Motor 5 auf der anderen Seite an der Gehäusewand 8 befestigt sind. Der Rotor 1 ist über eine durch eine Öffnung der Gehäusewand 8 ragende Hohlwelle 9 mit dem Motor 5 verbunden. An dem der Gehäusewand 8 gegenüberliegenden Ende des Motors 5 ist der Meßwertübertrager 6 angeordnet.

Der Stator 3 wird durch einen Hohlzylinder, dessen der Gehäusewand 8 zugewandtes Ende einen Bund 10 aufweist, gebildet. Er ist z. B. durch Schrauben, die durch den Bund 10 ragen, an der Gehäusewand 8 befestigt. Der Stator 3 weist an seiner äußeren Mantelfläche sechs radiale Nuten 11, die über die achsiale Länge des Stators 3 gleichmäßig verteilt sind, auf. Die achsiale Ausdehnung der Nuten 11 entspricht jeweils etwa 12 % und ihr Abstand voneinander etwa 4 % der Länge des Stator 3. Die Tiefe der Nuten 11 beträgt etwa 60 % der Wandstärke des Stators 3 und Wandstärke etwa 33 % seines Außendurchmessers. In den Nuten 11 befinden sich die als aufgewickelte Kupferleitungen ausgebildeten Primärwicklungen 4, die so angeordnet sind, daß kleine Stege 12 zwischen den Nuten 11 über die Primärwicklungen 4 ragen.

Der Rotor 1 weist einen Mantel 13, einen Flansch 14, einen Deckel 15 und ein Innenrohr 16 auf. Der Innendurchmesser des als Hohlzylinder ausgebildeten, über dem Stator 3 angeordneten Mantels 13 ist etwas größer als der Außendurchmesser des Stators 3, so daß zwischen den Stegen 12 und dem Mantel 13 einige Zehntel Millimeter Abstand bestehen. Die Wandstärke des Mantels 13 beträgt etwa 5 % des Außendurchmessers des Mantels 13. Der Außendurchmesser des Mantels 13 des Rotors 1 und der Durchmesser des Bundes 10 des Stators 3 sind gleich groß. Der achsiale Abstand zwischen Mantel 13 und Bund 10 beträgt wenige Millimeter.

Der Mantel 13 weist an seiner inneren Mantelfläche ebenfalls sechs radiale Nuten 17 auf, die dieselbe achsiale Anordnung aufweisen wie die Nuten 11 des Stators 3. Die Tiefe der Nuten 17 beträgt etwa 20 % der Wandstärke des Mantels 13. Die Nuten 17 werden von den als Kupferringe ausgebildeteten Sekundärwicklungen 2 ausgefüllt. Durch die im selben Achsenabschnitt angeordneten Primär- und Sekundärwicklung 4, 2 wird je eine Heizzone gebildet, d. h. durch in den Nuten 11 und 17 achsial hintereinander angeordneten sechs Primärwicklungen 4 und sechs Sekundärwicklungen 2 werden sechs Heizzonen gebildet. Im folgenden wird die äußere, der Gehäusewand 8 entgegengesetzte Heizzone als erste Heizzone, die zur Gehäusewand 8 folgende Heizzone als zweite Heizzone usw. genannt. Dabei sind die ersten drei Heizzonen zu einer ersten Heizgruppe und die letzten drei Heizzonen zu einer zweiten Heizgruppe zusammengefaßt.

Der Flansch 14 des Rotors 1 ist eine runde Scheibe mit einer zentralen Bohrung 18, deren Außendurchmesser dem Innendurchmesser des Mantels 13 entspricht und der an dem der Gehäusewand 8 entgegengesetzten Ende am Mantel 13 im Abstand von wenigen Millimetern zum Stator 3 befestigt, z. B. angeschweißt, ist. Auf dem Flansch 14 ist das in das Innere des Stators 3 ragende Innenrohr 16, dessen Innendurchmesser dem Durchmesser der Bohrung 18 des Flansches 14 entspricht und dessen Außendurchmesser kleiner ist als der Innendurchmesser des Stators 3, befestigt, z. B. ebenfalls angeschweißt. Das dem Flansch 14 entgegengesetzte Ende des Innenrohres 16 ist auf der Hohlwelle 9 befestigt, wobei das Innenrohr 16 innen und die Hohlwelle 9 entsprechend außen konisch abgeschrägt sind.

Der Mantel 13 weist, am äußeren Rand des Flansches 14 eine Stufe 19 auf, durch die ein Abschnitt 20 des Mantels 13 mit größerem Innendurchmesser gebildet wird. Dieser Abschnitt 20 ragt über den Flansch 14 hinaus und wird so durch den am Mantel 13, z. B. durch Schrauben, befestigten Deckel 15 abgeschlossen, daß ein Hohlraum 21 zwischen Deckel 15 und Flansch 14 gebildet wird.

Der Mantel 13 weist außerdem eine achsparallele Bohrung 22 außerhalb der Nuten 17 im Bereich der Stufe 19 auf, die sich bis über die Mitte der fünften Heizzone erstreckt. In der ersten Heizgruppe ist in Mitte über der zweiten Heizzone ein erster Temperaturfühler 23, z. B. ein Platinwiderstand, und in der zweiten Heizgruppe in der Mitte über der fünften Heizzone ein zweiter Temperaturfühler 24, ebenfalls ein Platinwiderstand, angeordnet. Die Verbindungsleitungen 25 der Temperaturfühler 23, 24 sind durch die Bohrung 22 im Mantel 13, den Hohlraum 21 zwischen Deckel 15 und Flansch 14, die Bohrung 18 des Flansches 14, das Innere des Innenrohres 16 und der Hohlwelle 9 und durch den Motor 5 zum Meßwertübertrager 6 geführt.

Die achsiale Länge einer Galette von der Gehäusewand 8 bis zum Deckel 15 beträgt beispielsweise 250 mm, der Außendurchmesser des Mantels 13 etwa 200 mm, die Wandstärke seines Mantels etwa 10 mm, der Außendurchmesser des Stators 3 etwa 180 mm, die Wandstärke des Stators 3 etwa 60 mm, der Außendurchmesser des Innenrohres 16 etwa 56 mm und der Durchmesser der Bohrung 18 des Flansches 14 etwa 30 mm.

Der Meßwertübertrager 6 weist einen rotierenden Sender 26 z. B. mit einem Multiplexer, einem Analog-Digital-Wandler, einer Leuchtdiode und einen feststehenden Empfänger 27, z. B. mit einer Fotozelle, einem Digital-Analog-Wandler und einem weiteren Multiplexer, auf.

Der Meßwertübertrager 6 ist mit der Regelvorrichtung 7, die für jede Heizgruppe eine mit dem jeweiligen Temperaturfühler 23, 24 verbundene Regeleinheit und eine mit der Regeleinheit und den Heizzonen verbundene Stelleinheit zur Zufuhr der Heizleistung zu den Heizzonen aufweist, verbunden.

Im folgenden werden die zur ersten Heizgruppe gehörenden Regeleinheit und Stelleinheit beschrieben. Die Regeleinheit weist einen über eine Leitung 28 mit dem Meßwertübertrager 6 verbundenen Zweipunktregler 29 und die Stelleinheit ein über eine Leitung 30 mit dem Zweipunktregler 29 verbundenes Lastrelais 31 und eine über eine Leitung 32 mit dem Lastrelais 31 verbundene Vorrichtung 33 mit zwei Transformatoren auf. Das Lastrelais 31 ist über eine weitere Leitung 34 mit der Primärwicklung 4 der zweiten Heizzone verbunden. Das Lastrelais 31 kann ein mechanisches oder ein elektronisches, d. h. ein mit Thyristoren versehenes, Schaltelement sein. Die Vorrichtung 33 ist beispielsweise ein Mehrfachtransformator, bei dem die beiden Transformatoren durch eine Primärwicklung und eine Sekundärwicklung mit unterschiedlichen Spannungen zugeordneten Abgriffen gebildet werden. Die beiden Abgriffe für die erste und dritte Heizzone sind über Leitungen 35 und 36 mit diesen Heizzonen verbunden.

Die Regeleinheit und die Stelleinheit der zweiten Heizgruppe sind analog aufgebaut.

Im Betrieb wird die Temperatur in der zweiten Heizzone kontinuierlich mit dem Temperaturfühler 23 und analog in der fünften Heizzone mit dem Temperaturfühler 24 gemessenen. Die den beiden Temperaturen entsprechenden Signale werden im Meßwertübertager 6 vom Sender 26 auf den Empfänger 27 übertragen. Dabei werden beispielsweise die von den Platinwiderständen der Temperaturfühler 23, 24 ankommenden Spannungswerte hintereinander digitalisiert, von der Diode gesendet, von der Fotozelle empfangen, in analoge Werte umgewandelt und auf die beiden Zweipunktregler 29 der Heizgruppen aufgeteilt.

Der Zweipunktregler 29 der ersten Heizgruppe vergleicht das ankommende Signal, den Istwert, mit seinem Sollwert, indem er das invertierte Signal des Istwertes zum Sollwert addiert. Je nachdem ob das Ergebnis über oder unter einem vorgegebenen Schaltwert liegt, schaltet der Zweipunktregler 29 das Lastrelais 31 ein oder aus.

Bei eingeschalteten Lastrelais 31 werden die Primärwicklungen 4 der zweiten Heizzone mit Strom versorgt. Gleichzeitig werden auch die erste und die dritte Heizzone über die Transformatoren der Vorrichtung 33 mit Strom versorgt.

Damit wird die Heizleistung der zweiten, ausgewählten Heizzone über die in dieser Heizzone gemessene Temperatur geregelt. Die Heizleistung der ersten und dritten Heizzone wird in Abhängigkeit, und zwar proportional, zu der Heizleistung der zweiten Heizzone zugeführt, wobei die Heizleistung der ersten, äußeren Heizzone das 1,7, bis 4-fache und die der dritten, inneren Heizzone das 0,9 bis 1,4-fache beträgt.

Die Regelung der Heizleistung der fünften Heizzone, d. h. der ausgewählten Heizzone, sowie die Zufuhr der Heizleistung zu der vierten, inneren und der sechsten, äußeren Heizzone wird in der zweiten Heizgruppe analog durchgeführt.

Die Stelleinheiten der beiden Heizgruppen können auch jeweils einen weiteren Transformator aufweisen, wobei das jeweilige Lastrelais 31 über diesen mit der jeweiligen ausgewählten Heizzone verbunden ist. Dazu könnte je eine Vorrichtung mit drei Transformatoren, die an die Heizzone der jeweiligen Heizgruppe angeschlossen sind, mit dem jeweiligen Lastrelais 31 verbunden sein.

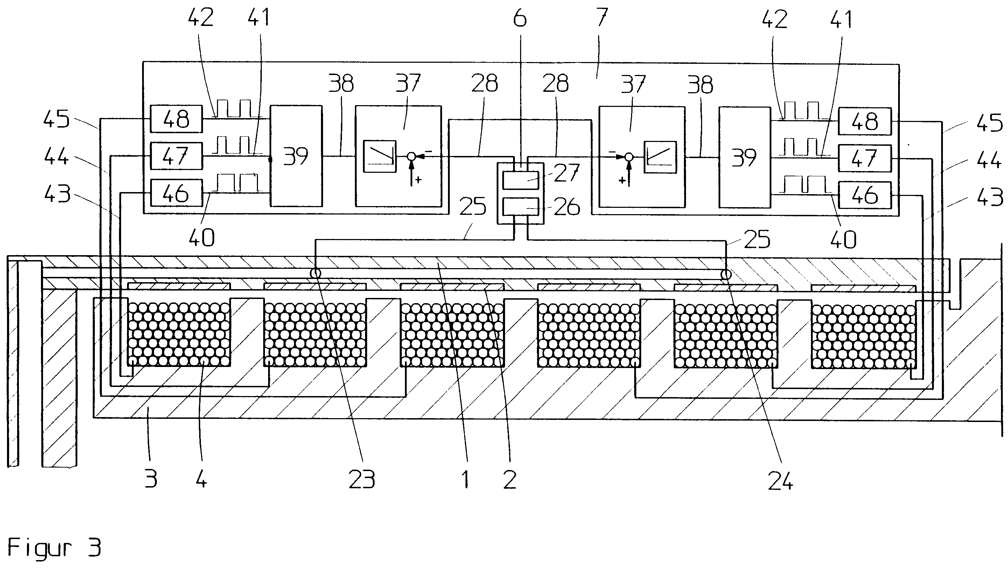

### Beispiel 2 (Figur 3)

Die Galette des Beispiels 2 unterscheidet sich von der des Beispiels 1 darin, daß
- jede Regeleinheit einen kontinuierlichen Regler 37, z. B. einen PID-Regeler, aufweist,
- jede Stelleinheit einen über eine Leitung 38 mit dem Regler 37 verbundenen Stellwertgeber, einen Mikroprozessor 39, und drei über Leitungen 40, 41, 42 mit dem Stellwertgeber, verbundene und über Leitungen 43, 44, 45 mit den drei Heizzonen der Heizgruppe verbundene Lastrelais 46, 47, 48 aufweist. Der Mikroprozessor 39 weist neben Rechercheneinheiten und den Speicherplätzen übliche Ein- und Ausgänge zur Signalumwandlung auf
Die zweite Heizgruppe ist analog aufgebaut.

Im Betrieb wird für jede Heizgruppe das der Temperatur entsprechende Signal wie im Beispiel 1 als analoges Signal zum Regler 37 geleitet. Im Regler 37 wird dieser Istwert mit seinem Sollwert verglichen und ein der Abweichung entsprechendes analoges Signal dem Mikroprozessor 39 zugeführt. Das am Eingang des Mikroprozessors 39 digitalisierte Signal wird über ein Programm in drei Schaltsignale, die den Lastrelais 46, 47, 48 zugeführt werden umgewandelt.

Diese Signale haben beispielsweise, wie in Figur 3 dargestellt, gleichlange Zykluszeiten und unterschiedliche Einschaltzeiten. Durch die unterschiedliche Einschaltzeiten der Lastrelais 46, 47, 48 wird den Heizzonen unterschiedliche Heizleistung zugeführt.

In der folgenden Tabelle sind für zwei Betriebszustände einer Galette für die verschiedenen Heizzonen die Faktoren angegeben, mit denen die Heizleistung der ausgewählten Heizzonen multipliziert werden. In der ersten Heizgruppe ist beispielsweise die der ersten Heizzone zugeführte Heizleistung das 2,0-fache der Heizleistung der zweiten Heizzone, d. h. der ausgewählten Heizzone.

| Betriebszustand | 1. Heizgruppe | | 2. Heizgruppe | |
|---|---|---|---|---|
| | 1. Heizzone | 3. Heizzone | 4. Heizzone | 6. Heizzone |
| 4000 m/min 200°C | 2,0 | 1,0 | 1,0 | 2,0 |
| 2000 m/min 180°C | 2,5 | 1,1 | 1,2 | 2,1 |

Es ist auch möglich für beide Heizgruppen nur einen Mikroprozessor einzusetzen. Bei einer weiteren Ausführungsform der Erfindung weist die Regelvorrichtung einen Mikroprozessor und sechs Lastrelais auf. Dabei bildet der Mikroprozessor für jede Heizgruppe eine Regeleinheit und einen Stellwertgeber in Form von Programmen und ist mit den Lastrelais für die Heizzonen verbunden.

Mit den erfindungsgemäßen Vorrichtungen und Verfahren können Störgrößen, z. B. Änderungen der Raumtemperatur, der Feuchte oder Dichte der Fäden, ebenso wie Störgrößen durch verfahrensbedingte Änderungen der Geschwindigkeit der Galette, schnell und sicher ausgeregelt werden, ohne daß Kopplungseffekte auftreten. Dadurch werden Abweichungen der Temperatur von dem vorgegebenen Temperaturprofil auch in der Randbereichen geringer als 1,5°C gehalten.

## Patentansprüche

1. Verfahren zum induktiven Beheizen einer Galette, bei dem
- ein als Hohlwalze ausgebildeter Rotor der Galette mit Sekundärwicklungen beheizt wird, indem auf einem Stator im Inneren des Rotars angeordneten Primärwicklungen Heizleistung zugeführt wird,
- die Heizleistung in mindestens zwei, achsial hintereinander angeordneten Heizzonen mit je einer Primär- und einer Sekundärwicklung separat zugeführt wird,
- mindestens im Bereich einer Heizzone die Temperatur des Mantels gemessen und über die Heizleistung dieser Heizzone geregelt wird,
dadurch gekennzeichnet, daß
- mindestens zwei Heizzonen zu einer Heizgruppe zusammengefaßt werden,
- in jeder Heizgruppe die Temperatur gemessen und über die Heizleistung einer ausgewählten Heizzone geregelt wird und
- die Heizleistung der übrigen Heizzonen der Heizgruppe jeweils in Abhängigkeit zu dieser Heizleistung zugeführt wird.

2. Verfahren nach Anspruch 1, dadurch gekennzeichnet, daß die Temperatur im Bereich der ausgewählten Heizzone gemessen wird.

3. Verfahren nach Anspruch 1 oder 2, dadurch gekennzeichnet, daß die Heizleistung der übrigen Heizzonen jeweils proportional zur Heizleistung der ausgewählten Heizzone zugeführt wird.

4. Verfahren nach einem der Ansprüche 1 bis 3, dadurch gekennzeichnet, daß
- die Temperatur der ausgewählten Heizzone über eine ein Lastrelais (31) zur Zufuhr der Heizleistung aller Heizzonen einer Heizgruppe schaltende Regeleinheit geregelt wird,
- wobei die Heizleistung der ausgewählten Heizzone direkt durch das Lastrelais (31) zugeführt wird, und
- die Heizleistung der übrigen Heizzonen der Heizgruppe über mit dem Lastrelais (31) verbundene Transformatoren zugeführt wird.

5. Verfahren nach einem der Ansprüche 1 bis 3, dadurch gekennzeichnet, daß
- die Temperatur einer ausgewählten Heizzone über eine ein Lastrelais zur Zufuhr der Heizleistung aller Heizzonen einer Heizgruppe schaltende Regeleinheit geregelt wird,
- wobei die Heizleistung der ausgewählten Heizzone und
- die der übrigen Heizzonen der Heizgruppe über mit dem Lastrelais verbundene Transformatoren zugeführt wird.

6. Verfahren nach einem der Ansprüche 1 bis 3, dadurch gekennzeichnet, daß
- die Temperatur einer ausgewählten Heizzone über eine Regeleinheit und einen Stellwertgeber, insbesondere einen Mikroprozessor (39), der ein Lastrelais (46) zur Zufuhr der Heizleistung der ausgewählten Heizzone schaltet, geregelt wird und
- die Heizleistung der übrigen Heizzonen der Heizgruppe über von dem Stellwertgeber geschaltete Lastrelais (47, 48) zugeführt wird.

7. Verfahren nach einem der Ansprüche 1 bis 3, dadurch gekennzeichnet, daß
- die Temperatur einer ausgewählten Heizzone über einen eine Regeleinheit und einen Stellwertgeber aufweisenden Mikroprozessor, der ein Lastrelais zur Zufuhr der Heizleistung der ausgewählten Heizzone schaltet, geregelt wird und
- die Heizleistung der übrigen Heizzonen der Heizgruppe über durch den Mikroprozessor geschaltete Lastrelais zugeführt wird.

8. Verfahren zum induktiven Beheizen einer Galette nach einem der Ansprüche 1 bis 7, dadurch gekennzeichnet, daß die Heizzonen in zwei Heizgruppen zusammengefaßt sind, wobei die Heizleistung in jeder Heizgruppe in mindestens zwei Heizzonen zugeführt wird.

9. Verfahren zum induktiven Beheizen einer Galette nach Anspruch 8, dadurch gekennzeichnet, daß
- in jeder der beiden Heizgruppen drei Heizzonen zusammengefaßt sind,
- wobei den äußeren Heizzonen das 1,7- bis 4-fache und den inneren Heizzonen das 0,9- bis 1,4-fache der Heizleistung der jeweiligen ausgewählten geregelten Heizzone zugeführt wird.

10. Induktiv beheizte Galette
- mit einem als Hohlwalze ausgebildeten Rotor mit Sekundärwicklungen,
- mit einem Stator im Inneren des Rotors mit Primärwicklungen,
- wobei mindestens je zwei Primär- und Sekundärwicklungen achsial hintereinander angeordnet sind und
- die im selben Achsenabschnitt angeordneten Primär- und Sekandärwicklungen eine Heizzone bilden,
- mit mindestens einem im Bereich einer Heizzone im Mantel angeordneten Temperaturfühler und
mit einer Regelvorrichtung zur Regelung der Temperatur mindestens einer Heizzone über die Heizleistung,
dadurch gekennzeichnet, daß
- mindestens zwei Heizzonen eine Heizgruppe bilden,
- in jeder Heizgruppe ein Temperaturfühler (23, 24) angeordnet ist und
- die Regelvorrichtung für jede Heizgruppe eine mit dem Temperaturfühler (23, 24) verbundene Regeleinheit und eine mit der Regeleinheit und den Heizzonen verbundene Stelleinheit zur Zufuhr der Heizleistung aufweist.

11. Induktiv beheizte Galette nach Anspruch 10, dadurch gekennzeichnet, daß der Temperaturfühler (23, 24) im Bereich einer ausgewählten Heizzone angeordnet ist und die Stelleinheit ein mit der Regeleinheit verbundenes Lastrelais (31) und einen oder mehrere mit dem Lastrelais (31) verbundene Transformatoren aufweist, wobei das Lastrelais (31) direkt mit der ausgewählten Heizzone und der oder die Transformatoren mit den übrigen Heizzonen der Heizgruppe verbunden sind.

12. Induktiv beheizte Galette nach Anspruch 10, dadurch gekennzeichnet, daß die Stelleinheit ein mit der Regeleinheit verbundenes Lastrelais und mindestens zwei mit den Lastrelais verbundene Transformatoren aufweist, wobei das Lastrelais über die Transformatoren mit den Heizzonen der Heizgruppe verbunden ist.

13. Induktiv beheizte Galette nach Anspruch 10, dadurch gekennzeichnet, daß die Stelleinheit einen mit der Regeleinheit verbundenen Stellwertgeber, insbesondere einen Mikroprozessor (39), und mit dem Stellwertgeber und den Heizzonen der Heizgruppe verbundene Lastrelais (46, 47, 48) aufweist.

14. Induktiv beheizte Galette nach Anspruch 10, dadurch gekennzeichnet, daß die Regelvorrichtung einen Mikroprozessor, der für jede Heizgruppe eine Regeleinheit und einen Stellwertgeber umfaßt, und mit dem Mikroprozessor verbundene Lastrelais aufweist.
